# EUROPEAN PATENT APPLICATION

(11) **EP 1 450 319 A2**
(43) Date of publication of application: **25.08.2004**
(21) Application number: 03028680.1
(22) Date of filing: 16.12.2003
(51) Int. Cl.: G07F 17/32, G06F 17/60

(54) **System for management of hotel facilities including casino**

(30) Priority: 20.12.2002 JP 2002370576
(71) Applicant: Aruze Corp., Tokyo 135-0063 (JP)
(72) Inventor: Fujimoto, Jun, Tokyo 135-0063 (JP)
(74) Representative: HOFFMANN - EITLE

(57) **Abstract**

The hotel management system installed in the hotel, for comprehensively managing the using state in a plurality of hotel facilities including casino comprises: the card issuing machine 4b for issuing the identification card 20 to the hotel user, the identification card 20 having the identification number differently allotted every hotel user and capable of being used in the casino 22 and the other hotel facilities (the front desk 4, the restaurant 6, the bar lounge 8, the guest room 16); the reading device (the reading device 60, 164, the card reader 6b, 8b, 16b) installed in each of the hotel facilities (the casino 22, the front desk 4, the restaurant 6, the bar lounge 8, the guest room 16) for reading the identification number recorded in the identification card 20 issued by the card issuing machine 4b; and the managing devices (the hotel server 2, the house card server 18, the service server 10, the intra service server 12, the tabulation-analysis server 62, the casino deposit server 66, the PTS server 56, the multimedia server 14) for managing the using state in each of the hotel facilities corresponding to the identification number read by the reading device.

## Description

### CROSS-REFERENCE TO THE RELATED APPLICATION(S)

This application is based upon and claims a priority from the prior Japanese Patent Application No. 2002-370576 filed on Dec. 20, 2002, the entire contents of which are incorporated herein by reference.

### BACKGROUND OF THE INVENTION

### 1. Field of the Invention

The present invention relates to a hotel management system for comprehensively managing using state of various hotel facilities including a casino, and in particular, to a hotel management system capable of comprehensively managing using state of a casino and various hotel facilities other than the casino by hotel users based on that one identification medium given to each of hotel users is made commonly utilizable for the casino and various hotel facilities other than the casino.

### 2. Description of Related Art

In general, as for management systems of hotel facilities, there are previously proposed various management systems for managing hotel facilities. For instance, a hotel service system is shown in Japanese Unexamined Publication No. 2000-357272. In this hotel service system, a house card (for example, an identification card in which an identification number for a hotel user is stored) is given to the hotel user when checking in the hotel, and the hotel user can receive various services in the facilities in the hotel by using the house card. For instance, in a restaurant or a bar lounge in the hotel, the identification number of the house card is read out and a charge sum to be paid is transmitted to and accumulated in a hotel server based on the identification number. And a total charge sum to be paid is displayed on a terminal device installed at a hotel front desk by verifying the identification number recorded in the house card when the hotel user checks out. Further, the hotel user may use the house card when using transportation out of the hotel while staying at the hotel by connecting the hotel server to the transportation through a network.

BY the way, there exists a hotel in which a casino is installed. In this kind of hotel, it is general that a gaming charge in the casino is set as a separate account except for special gaming machines such as a slot machine and the like. Therefore, the hotel user cannot settle accounts of the gaming charge together with the other charge sum by using the house card when checking out the hotel. Namely, the hotel user has to pay out gaming charge in cash in the casino as a general rule, thus the hotel user has to exchange cash in chips even though deposit money is set in the house card. As a result, it is very troublesome and inconvenient for the hotel user.

And, the previous hotel management system mentioned above cannot record types of games played in and sum consumed in the casino and the other information in a history from check-in till check-out of the hotel user, therefore it is very difficult to spread out highly individualized services.

Further, as mentioned, since the hotel user has to pay out the gaming charge in cash in the casino as a rule and cannot use credit service, there may occur a problem that the hotel user cannot pay the gaming charge in a case that the hotel user is beside himself with the game and endlessly enjoys the game.

### SUMMARY OF THE INVENTION

The present invention has done to accomplish the above problems and it is an object of the present invention to provide a hotel management system capable of comprehensively managing using state in a casino and the other hotel facilities by hotel users based on that one identification medium given to each of hotel users is made commonly utilizable for the casino and various hotel facilities other than the casino. Especially, it is an object to provide a hotel management system capable of comprehensively managing histories of various games done in the casino while managing using state of various hotel facilities other than the casino.

In order to accomplish the above object, according to one aspect of the present invention, it is provided a hotel management system comprehensively managing using state of a plurality of hotel facilities including a casino, the hotel management system comprising:
identification medium issuing means for issuing an identification medium to a hotel user, the identification medium capable of being used in the casino and the hotel facilities other than the casino and having identification information which is differently allotted for each hotel user;
reading means for reading the identification information recorded in the identification medium issued by the identification medium issuing means, the reading means being installed in each of the hotel facilities; and
managing means for managing the using state in each of the hotel facilities corresponding to the identification information read by the reading means.

According to the above constructed hotel management system, the identification medium is issued to the hotel user by the identification medium issuing means in the hotel. The identification medium can be used in not only the casino but also the hotel facilities other than the casino. And the identification information recorded in the identification medium is read out by the reading means installed in each of the hotel facilities and the using state in the hotel facilities is managed corresponding to the read identification information by the managing means. Therefore, the hotel users including guests staying in the hotel and users utilizing the hotel facilities can utilize the casino and the other hotel facilities through the identification medium issued in the hotel. Thereby, it can be spread highly individualized services in the hotel. In particular, up to this time, the gaming charge in the casino is set as a separate account and the casino user has to manage money for game himself or herself, thus it is very troublesome and inconvenient for the casino user. However, in the above hotel management system, the casino user can pay out in one lump by using the identification medium when checking out the hotel, therefore burden of the casino user can be reduced.

As mentioned, according to the hotel management system, the hotel user can use all hotel facilities including casino by only one identification medium.

Further, according to another aspect of the present invention, it is provided a hotel management system comprehensively managing using state of a plurality of hotel facilities including a casino, the hotel management system comprising:
an identification medium issuing device for issuing an identification medium to a hotel user, the identification medium capable of being utilized in the casino and the hotel facilities other than the casino and having an identification information which is differently allotted for each hotel user;
a reading device for reading the identification information recorded in the identification medium issued by the identification medium issuing device, the reading device being installed in each of the hotel facilities; and
a managing device for managing the using state in each of the hotel facilities corresponding to the identification information read by the reading device.

According to the above constructed hotel management system, the identification medium is issued to the hotel user by the identification medium issuing device in the hotel. The identification medium can be used in not only the casino but also the hotel facilities other than the casino. And the identification information recorded in the identification medium is read out by the reading device installed in each of the hotel facilities and the using state in the hotel facilities is managed corresponding to the read identification information by the managing device. Therefore, the hotel users including guests staying in the hotel and users utilizing the hotel facilities can utilize the casino and the other hotel facilities through the identification medium issued in the hotel. Thereby, it can be spread highly individualized services in the hotel. In particular, up to this time, the gaming charge in the casino is set as a separate account and the casino user has to manage money for game himself or herself, thus it is very troublesome and inconvenient for the casino user- However, in the above hotel management system, the casino user can pay out in one lump by using the identification medium when checking out the hotel, therefore burden of the casino user can be reduced.

As mentioned, according to the hotel management system, the hotel user can use all hotel facilities including casino by only one identification medium.

The above and further objects and novel features of the invention will more fully appear from the following detailed description when the same is read in connection with the accompanying drawings. It is to be expressly understood, however, that the drawings are for purpose of illustration only and not intended as a definition of the limits of the invention.

### BRIEF DESCRIPTION OF THE DRAWINGS

The accompanying drawings, which are incorporated herein and constitute a part of this specification illustrate embodiments of the invention and, together with the description, serve to explain the objects, advantages and principles of the invention.

In the drawings,
Fig. 1 is an explanatory view for showing a casino/hotel construction in which a hotel management system according to the embodiment of the present invention is constructed,
Fig. 2 is an explanatory view for schematically showing a roulette wheel and a bet board, Fig. 2(a) is a plan view showing a construction of the roulette wheel, Fig. 2(b) is a plan view showing a construction of the bet board and Fig. 2(c) is an explanatory view showing a basic construction of a detecting device for detecting a stop position of a roulette ball and a detecting device for detecting bet information,
Fig. 3 is an explanatory view showing histories of roulette games,
Fig. 4 is an explanatory view showing histories constructed in a house card server, each history corresponding to a hotel user,
Fig. 5 schematically indicates a gaming table device, Fig. 5(a) is an explanatory view schematically showing a state that card games are conducted on the gaming table by using plural playing cards and chips, Fig. 5(b) is an explanatory view schematically showing a construction for detecting card identification information of the playing card and Fig. 5(c) is an explanatory view schematically showing a construction for detecting chip identification information of the chip, and
Fig. 6 schematically shows a history state in the card games, Fig. 6(a) is an explanatory view schematically showing a state that entire histories of the playing cards are recorded and managed, and Fig. 6(b) is an explanatory view schematically showing a state that entire histories of the chips are recorded and managed.

### DETAILED DESCRIPTION OF THE PREFERRED EMBODIMENTS

Hereinafter, a hotel management system according to the embodiment of the present invention will be described with reference to the drawings.

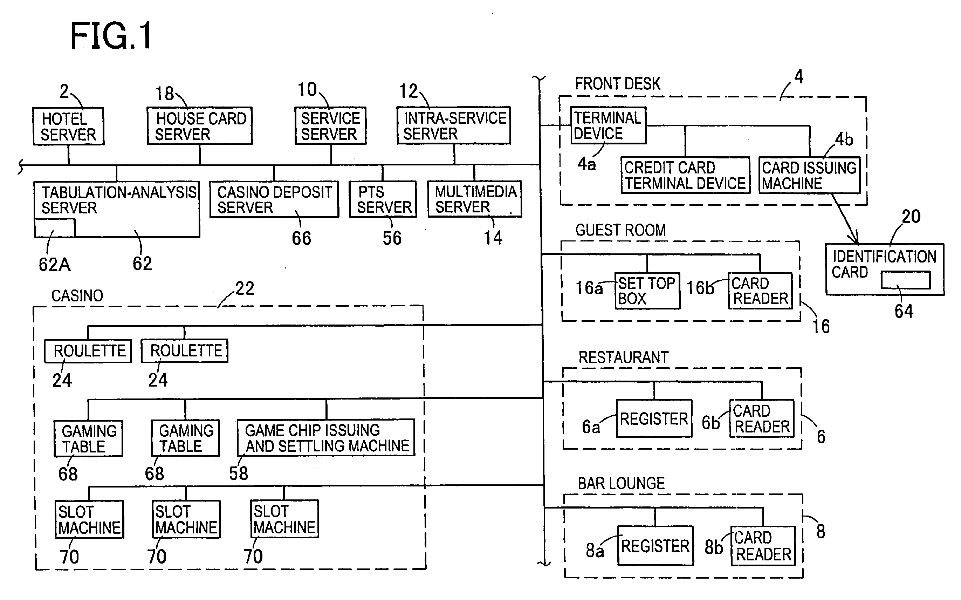

In Fig. 1, a casino/hotel construction, in which the hotel management system of the embodiment is constructed, is shown.

In a hotel server 2, it is constructed various functions (for instance, the hotel management system according to the embodiment) for comprehensively managing a terminal device 4a installed on a front desk 4 and registers 6a, 8a installed in a restaurant 6 and a bar lounge 8. And in a service server 10, it is constructed various functions for reserving various shows or events provided in the hotel and issuing tickets therefor. Further, in an intra-service server 12, it is constructed functions for controlling an intranet constructed in the hotel, and in a multi-media server 14, it is constructed functions corresponding to video-on-demand and game-on-demand utilized when the hotel user enjoys video service or game service in a guest room 16 by using a set top box 16a.

A house card server 18 has various functions for managing an identification medium utilizable for the house card (for example, an identification card, a disc-like medium such as a coin, a cellular phone and the like) and an individual account of the hotel user.

Here, in the embodiment, an identification card 20 is used as the identification medium, and the identification card 20 has, for instance, various functions to identify a guest staying in the hotel or a user who merely uses the facilities in the hotel. In this case, the identification card (house card) 20 for identifying the guest checking in the casino/hotel or the user of the facilities (hereinafter, abbreviated as "hotel user") is issued to the hotel user by a card issuing machine 4b installed in the front desk 4. Thereafter, the hotel user can use all facilities in the casino/hotel by submitting the identification card 20 at each of the facilities and passing check of the identification card 20.

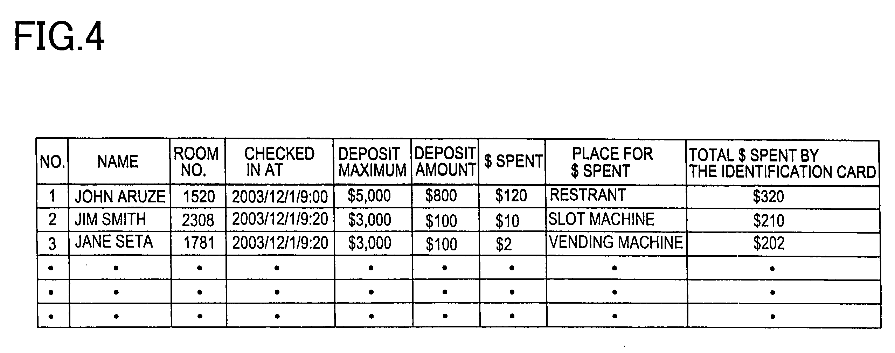

For example, as shown in Fig. 4, it can be constructed in the house card server 18 several items such as the hotel user's name, the room number of the guest room, the check-in time, the deposit maximum (deposit set by the hotel user), the deposit amount, the dollar ($) spent, the place for dollar spent and the total dollar ($) spent by the identification card 20. In Fig. 4, it can be understood that the hotel user John Aruze checked in the hotel on Dec. 1, 2003, and is staying in the guest room of room No. 1520. And the maximum deposit of the identification card 20 given to John Aruze is set to $5,000, thus he can spend up to $5,000. Here, it is supposed that room charge $200 are charged beforehand in the identification card 20 and the total dollar ($) spent of the hotel user is counted to start from the $200. While staying, John Azruze spent $120 at the restaurant 6 in the casino/hotel, and the total dollar ($) spent of John Aruze is $320 at that time shown in Fig. 4. As shown in Fig. 4, money flow of John Aruze in the casino/hotel is managed by the house card server 18. Further, when John Aruze checks out of the casino/hotel (not shown in Fig. 4), he can settle the room charge by the identification card 20. Here, the present invention is not limited to the above description and it may be conceivable that the room charge is separately settled by the other medium such as the credit card.

And in a case that the hotel user uses the restaurant 6 or the bar lounge 8, or video service or game service in the guest room 16, the identification card 20 is read by the card reader 6b, 8b, 16b, thereby charge sum to be paid is stored in the hotel server 2. And total charge sum to be paid is displayed on the terminal device 4a when the hotel user checks out. That is to say, the identification card 20 can link with various management systems other than the game management system (mentioned later), therefore the identification card 20 functions as at least a credit card used for paying money when the hotel user buys goods or eats and drinks. Further, the identification card 20 also functions as a room key for the guest room 16 (see Fig. 4).

As mentioned, when the hotel user receives various services in the hotel facilities by using the identification card 20, charge to be paid for services is managed in correspondence with each hotel user in the house card server 18 together with the total charge and the deposit amount, thereby money flow in the hotel facilities can be clearly managed and grasped every hotel user.

Here, a tabulation-analysis server 62, a casino deposit server 66 and a player tracking system (PTS) server 56 will be described hrereinafter.

In the management system of the above casino/hotel, it is constructed various functions to comprehensively manage using state of all hotel facilities other than the casino 22 and is constructed a game management system to manage various games conducted in a roulette 24 and on a gaming table 68 mentioned hereinafter. In this embodiment, there are provided in the hotel a plurality of hotel facilities such as facilities for staying (for example, the guest room 16) and for eating and drinking (for example, the restaurant 6 and the bar lounge 8), and the other facilities connecting with the hotel (for example, a private pool, a private beach and a golf links). Further, as a part of the hotel facilities, it is provided the casino 22 in which plural kinds of gaming machines such as the roulettes 24, the gaming tables 68, the slot machines 70 and the like. Here, the identification card 20 is utilizable when the hotel user utilizes all hotel facilities including the casino 22, and a different identification number (card ID, see Fig. 4) every hotel user is recorded in the identification card 20.

Hereinafter, as an example of the game management system, the game management system for the roulette 24 will be described. In this game management system, various roulette games are conducted. In the roulette games, the stop position of the roulette ball 28 thrown in the roulette wheel 26 is anticipated and chips 30 are betted on bet area (s) of the bet board 32 corresponding to the stop position (see Figs- 2 and 3).

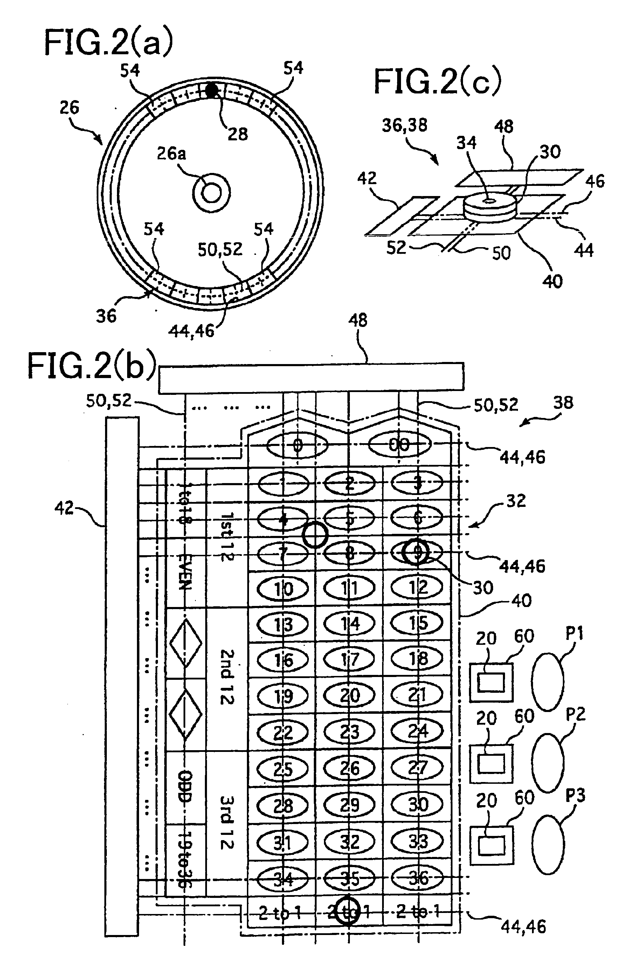

In the game management system, as shown in Figs. 2(a) to 2(c), there are provided the bet board 32, a chip information recording device 34 embedded in each chip 30, a stop position detecting device 36 for detecting the stop position of the roulette ball 28, a bet information detecting device 38 provided in the bet board 32 and a payout calculating device 62A.

Here, in the bet board 32, plural bet areas (for example, each spot divided by numerals such as 0, 00, 1, 2, ···, 35, 36) corresponding to the stop positions at each of which the roulette ball 28 in the roulette wheel 26 may stop, are formed and the chips 30 are betted on the bet areas.

The chip information recording device 34 is embedded in each chip 30 and the information connecting with the chip 30 is recorded.

The stop position detecting device 36 is provided on the roulette wheel 26 and detects the stop position of the roulette ball 28 in the roulette wheel 26 and kinds of value in the roulette games.

The bet information detecting device 38 is provided on the bet board 32 and detects the bet position on the bet board 32 and bet value corresponding to the bet position by reading the chip information recorded in the chip information recording device 34 in the chip 30 when the chip 30 is betted on the bet areas.

The payout calculating device 62A calculates the payout in the roulette game based on the stop position of the roulette ball 28 in the roulette wheel 26, the bet position of the chip 30 and the bet value corresponding to the bet position.

The chip information recording device 34 comprises a subminiature wireless ID tag embedded in each chip 30. The information connecting with the chip 30 includes: a specific number (the number identifying each chip 30) for identifying the chip 30, value (for example, 1 dollar, 5 dollars, 10 dollars), color of the chip 30 and places, i.e., the hotel facilities including the casino 22 where the chips 30 can be used.

Both the stop position detecting device 36 and the bet information detecting device 38 have basically same construction. In particular, as shown in Fig. 2(c), both devices 36 and 38 are constructed from an ID reading device and a measuring device 40. In the ID reading device, there are provided an X-axis transmitting antenna 44 and an X-axis receiving antenna 46 both of which are extended parallel with each other from an X-axis scanning driver 42, and a Y-axis transmitting antenna 50 and a Y-axis receiving antenna 52 both of which are extended parallel with each other from a Y-axis scanning driver 48 and arranged so as to cross the X-axis transmitting antenna 44 and the X-axis receiving antenna 46 at right angle.

In the above ID reading device, in a case that the scanning wave is sent from the X-axis transmitting antenna 44 and the Y-axis transmitting antenna 50 under the state that the chip 30 is betted on the bet area of the bet board 32, the electric wave for reading is risen near the cross point of the antennae 44, 50. The electric wave for reading is received by the X-axis receiving antenna 46 and the Y-axis receiving antenna 52. At that time, if the chip 30 is betted (positioned) near the cross point, impedance is changed near the cross point based on that the chip 30 acts as dielectric substance, thereby wave receiving state in both the receiving antennae 46, 52 is changed. By detecting this changing state in wave receiving, it is detected whether the chip 30 exists or not. At the same time, the signal from the chip information recording device (the subminiature wireless ID tag) 34 is received by the X-axis receiving antenna 46 and the Y-axis receiving antenna 52, thereby the chip information such as the value of the chip 30 (1 dollar, 5 dollars, 10 dollars) and the specific number (the number identifying each chip 30) is read out.

Here, it will be described a case that the ID reading device mentioned above is applied to the stop position detecting device 36. As shown in Fig. 2(a), the roulette wheel 26 comprises a body of rotation with a circular plate-like shape. And in the roulette wheel 26, pockets 54 are concentrically formed from a rotational axis 26a. Total number of the pockets 54 is 38 though a part of the pockets 54 is shown in Fig. 2(a). In each pocket 54, a numeral is printed thereon, the numeral corresponding to one of plural bet areas each of which is allotted on the bet board 32 and comprises, for example, a spot area divided by a numeral such as 0, 00, 1, 2, ···, 35, 36.

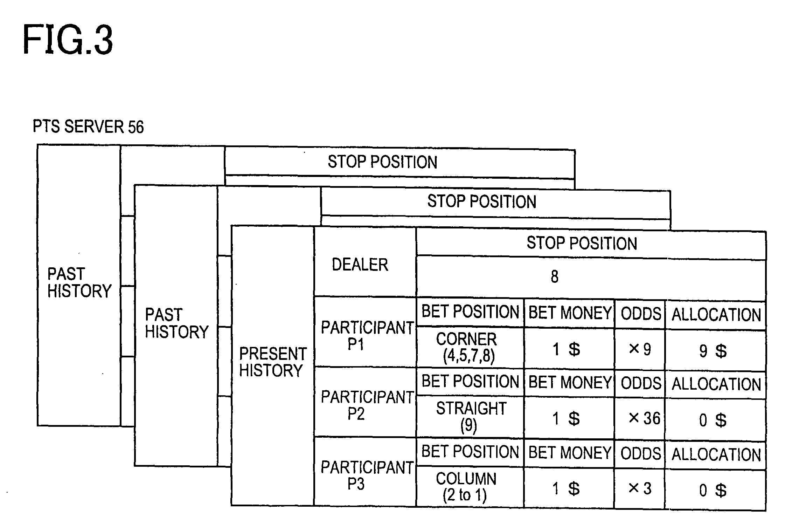

The stop position detecting device 36 of the roulette ball 28 is arranged in each pocket 54, and when the roulette ball 28 enters in the pocket 54, the roulette ball 28 positions on the cross point in the ID reading device mentioned above. At that time, the above mentioned electric wave for reading is in a rising state and when the roulette ball 28 is positioned near the cross point, the wave receiving state only in the above pocket 54 is changed. As a result, it can be detected the position in the roulette wheel 26 (the pocket 54) in which the roulette ball 28 enters. At that time, the detected data is transmitted to the PTS (Player Tracking System) server 56 and the history thereof is comprehensively managed, as shown in Fig. 3.

Further, it will be described the case that the ID reading device is applied to the bet information detecting device 38. As shown in Fig. 2(b), a plurality of bet areas are formed in the bet board 32. And there are provided a pair of the X-axis transmitting antenna 44 and the X-axis receiving antenna 46 and a pair of the Y-axis transmitting antenna 50 and the Y-axis receiving antenna 52, so as to form the cross point in each bet area. When the chip 30 is betted on the bet area ("9": straight) in the above constructed bet board 32 as shown in Fig. 2(b), the betted chip 30 is positioned near the cross point of the ID reading device. Here, since the electric wave for reading is in a rising state, the wave receiving state only in the bet area is changed based on that the chip 30 is positioned near the cross point. As a result, it can be detected the bet area of the bet board 32 on which the chip 30 is betted. At that time, the detected data is transmitted to the PTS server 56 and the history thereof is comprehensively managed, as shown in Fig. 3.

The measuring device 40 is arranged so as to cover the bet area of the bet board 32 as shown in Fig. 2(c). It is utilizable, for example, an electronic measuring device such as a semiconductor pressure sensor and the like, as the measuring device 40. In the measuring device 40, unit weight corresponding to one chip 30 is recorded, and the number of the chips 30 betted on the bet board 32 can be calculated by dividing total weight of the chips 30 betted on the bet board 32 by the unit weight of one chip 30. In this case, the PTS server 56 compares the calculated number of the chips 30 and the detected result by the bet information detecting device 38, and when the calculated number of the chips 30 does not coincide with the detected result by the bet information detecting device 38, the PTS server 56 determines that counterfeit chips are used and alarms it to a dealer, for example.

Here, in the roulette ball 28, it is embedded an identification information recording device (not shown) in which identification information for identifying the roulette ball 28 is recorded. The identification information recording device comprises a subminiature wireless ID tag, which is embedded in the roulette ball 28. The identification information includes various information such as information indicating origin of the roulette ball 28, information indicating places (casino 22) where the roulette ball 28 can be used, information indicating kinds of the roulette ball 28 and the like.

The identification information recorded in the identification information recording device can be read by the ID reading device comprising the stop position detecting device 36. And the PTS server 56 can determine based on the read out information whether the roulette ball 28 is utilizable or not.

Hereinafter, It will be described how the roulette game is conducted in the above mentioned game management system. If persons P1, P2 and P3 desire to play the roulette game, they enter in the casino 22 (see Fig. 1) with their identification cards 20. At first, they obtain the chips 30 at the chip issuing and settling machine 58. And the identification card 20 is set on the reading device 60. At that time, the contents of the identification card 20 is read out by the reading device 60, thereby each person P1, P2 or P3 is identified and recognized as a game participant. Data read out and identified by the reading device 60 are transmitted to the PTS server 56 and persons P1, P2 and P3 are entered as the game participants in the present game as shown in Fig. 3. Here, reading method of the reading device 60 can be voluntarily set according to recording method in the identification card 20. For instance, if the recording method in the identification card 20 is magnetic recording method, the reading device 60 adopts magnetically reading method. Similarly, if the recording method in the identification card 20 is optical recording method, the reading device 60 adopts optically reading method.

At the start of the roulette game, the dealer rotates the roulette wheel 26 and enters the roulette ball 28 therein. While the roulette wheel 26 is rotating and the roulette ball 28 is moving in the roulette wheel 26, the participants P1, P2, P3 bet the chips 30 on the bet areas of the bet board 32. Here, for example, it is supposed that the participant P1 bets at the corner (4, 5, 7, 8), the participant P2 bets on the straight (9) and the participant P3 bets on the column (2 to 1), as shown in Fig. 3. At that time, the bet positions and the bet value (1 dollar, 5 dollars or 10 dollars: betted money) are detected by the bet information detecting device 38, and the detected result is transmitted to the PTS server 56. The PTS server 56 comprehensively manages the history of bet information.

In the mean time, rotation of the roulette wheel 26 gradually slows and the roulette ball 28 stops in one of the pockets 54. If the numeral of the pocket 54 in which the roulette ball 28 enters is "8," it is detected by the stop position detecting device 36 the numeral "8" which corresponds to the stop position of the roulette ball 28, and the result about the stop position is transmitted to the PTS server 56. The PTS server 56 comprehensively manages the history of the stop position.

It is constructed the payout calculating device 62A in the tabulation·analysis server 62, and the payout calculating device 62A calculates the payout in the roulette game based on the stop position of the roulette ball 28 (the numeral "8" corresponding to the stop position) in the roulette wheel 26 and both the bet position of the chip 30 and the bet value (betted money), as shown in Fig. 3.

Here, in the embodiment mentioned, though the chips 30 are directly betted on the bet board 32, since it is formed in the identification card 20 a deposit reference part 64 (see Fig. 1) by which the hotel user can refer the deposit amount deposited by the hotel user, the hotel user may enjoy the roulette game according to the referred result by the deposit reference part 64, instead of the chips 30. In this case, the participants P1, P2, P3 can bet desirable bet money by an input device (for example, ten keys, not shown) positioned near the participants P1, P2, and P3. Similarly to the case of the chips 30, the betted money is serially registered in the PTS server 56 and comprehensively managed by the tabulation-analysis server 62. Here, increase and decrease of the deposit amount in the casino 22 is comprehensively managed by the casino deposit server 66 (see Fig. 1), therefore it can be conducted without cash renewal treatment of the deposit balance according to score of the game result and paying treatment in a case that the participants desire to set an additional deposit.

In the above game management system, the entire game history can be comprehensively managed from the start of the game to the end thereof. Concretely speaking, the position of the roulette ball 28 and the bet position of the chip 30 are usually checked by the stop position detecting device 36 and the bet information detecting device 38. Therefore, when a counterfeit roulette ball or a counterfeit chip is used during the roulette game, it can be immediately determined that the counterfeit roulette ball or chip is used. Further, in a case that the dealer and the participants P1, P2, P3 conspire to do unfair act, it can be correctly grasped the time at which unfair act is done and the flow of the roulette ball 28 and the chip 30 in the roulette game, according to the history comprehensively managed in the PTS server 56.

Further, in the above game management system, the hotel user can use all hotel facilities by using the identification card (house card) 20 which is issued when checking in the hotel. Thus, it can be spread highly individualized services.

Especially, up to this time, the gaming charge in the casino is set as a separate account and the casino user has to manage money for game himself or herself, thus it is very troublesome and inconvenient for the hotel user. However, in the above game management system, the casino user can pay out in one lump by using the identification card 20 when checking out the hotel, therefore burden of the casino user can be reduced.

And it can be avoided the problem that the casino user is beside himself with the game and endlessly enjoys the game, by utilizing the deposit function in the identification card 20, thus the casino user can avoid to unwillingly get more loss than wins. As a result, the casino user can relievedly enjoy the roulette game.

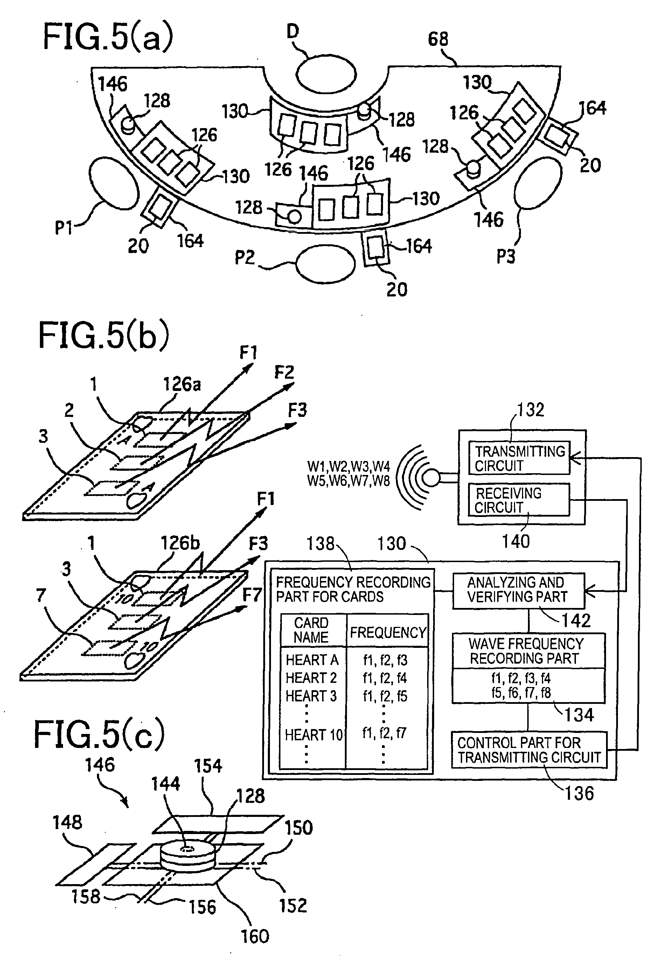

Here, as another function of the hotel management system, it will be described a game management system for managing games conducted on the gaming table 68, hereinafter. In such game management system, games using a plurality of playing cards 126 and chips 128 are done on the gaming table 68, as shown in Fig. 5(a).

The above game management system comprises a card identification information recording device in which card identification information is recorded every each card of the playing cards 126, a chip identification information recording device in which chip identification information is recorded every each chip of the chips 128, an identification information detecting device which is arranged in the gaming table 68 and detects not only the card identification information recorded in the card identification information recording device corresponding to each playing card 126 but also the chip identification information recorded in the chip identification recording device corresponding to each chip 128, and managing devices (the PTS server 56, the tabulation-analysis server 62 and the casino deposit server 66, mentioned later) which can manage at least histories and results in various games done on the gaming table 68 based on the card identification information and the chip identification information detected by the identification information detecting device.

In this embodiment, it is hypothetically supposed that a deck of cards with 54 cards are used as a plurality of cards 126, and the card identification information recording device is provided in each of the playing cards 126. Here, as shown in Fig. 5(b), more than two resonance wireless ID tags are arranged in each playing card 126 (see 126a, 126b), as the card identification information recording device. For example, as shown in Fig. 5(b), three resonance wireless ID tags 1, 2 and 3 are arranged in the card 126a which is the A of hearts and three resonance wireless ID tags 1, 3 and 7 are arranged in the card 126b which is the ten of hearts. In this case, the card identification information of each playing card 126 is constructed from combination of more than two resonance wireless ID tags. And the specific playing card 126 (126a or 126b) is judged among the plural playing cards 126 by detecting each echo wave (F1, F2, F3 or F1, F3, F7) transmitted from the resonance wireless ID tags.

As shown in Figs. 5(a) and 5(b), the identification information detecting device 130 for detecting the card identification information recorded in the card identification information device is arranged near the dealer D and each participant P1, P2 and P3 on the gaming table 68.

In the identification information detecting device 130, there are provided the transmitting circuit 132 for emitting electromagnetic waves to the plural playing cards 126 so that the echo waves (W1, W2, W3, W4, W5, W6, W7 and W8) are transmitted from the plural resonance wireless ID tags (for example, 1, 2 3 or 1, 3 7), the wave frequency recording part 134 for setting and recording frequencies (f1, f2, f3, f4, f5, f6, f7 and f8) of the electromagnetic waves (W1, W2, W3, W4, W5, W6, W7 and W8), the control part 136 for controlling the transmitting circuit 132 so as to transmit the electromagnetic waves according to each frequency recorded in the wave frequency recording part 134, the frequency recording part 138 for selecting combination (for example, f1, f2, f3 or f1, f3, f7) of more than two frequencies among the frequencies recorded in the wave frequency recording part 134 and recording the selected combination of more than two frequencies separately corresponding to each card (126a, 126b) of the playing cards 126, the receiving circuit 140 for receiving echo waves (F1, F2, F3 or F1, F3, F7) emitted from the plural resonance wireless ID tags (1, 2, 3 or 1, 3, 7) when the electromagnetic waves (W1, W2, W3, W4, W5, W6, W7, W8) are transmitted from the transmitting circuit 132, and the analyzing and verifying part 142 for analyzing the frequencies (f1, f2, f3 or f1, f3, f7) of the echo waves (F1, F2, F3 or F1, F3, F7) received by the receiving circuit 140 based on the frequencies (f1, f2, f3, f4, f5, f6, f7, f8) recorded in the wave frequency recording part 134 and for verifying the analyzed frequencies (f1, f2, f3 or f1, f3, f7) with the plural playing cards 126 (126a, 126b) recorded in the frequency recording part 138.

Here, in order to judge each card among the playing cards 126 with 54 cards by using the minimum number of the resonance wireless ID tags, eight wireless ID tags, each emitting the echo wave different from each other, are required. In this case, it is enough to combine three wireless tags (8 C 3 =56) and arrange them in each playing card 126. Further, if eleven wireless ID tags are used, it is enough to combine two wireless tags (1 1 C 2 =55) and arrange them in each playing card 126.

Hereinafter, it is supposed that eight wireless ID tags (though tags 1, 2, 3, 7 are shown in Fig. 5(b), eight wireless ID tags (1∼8) are used in practice) are used and three wireless ID tags are combined and arranged in each of the playing cards 126 with 54 cards. In this case, eight frequencies (f1, f2, f3, f4, f5. f6, f7 and f8) are recorded in the wave frequency recording part 134 of the identification information detecting device 130 so that eight wireless ID tags are resonated. And in the frequency recording part 138, three kinds of frequencies are selected in combination among eight kinds of frequencies recorded in the wave frequency recording part and the thus selected three kinds of frequencies are recorded corresponding to each playing card 126. For instance, the A of hearts is corresponded to the frequencies (f1, f2, f3) and the ten of hearts is corresponded to the frequencies (f1, f3, f7). In this case, if echo waves emitted from three resonance wireless ID tags are f1, f2, f3, it is judged that the card is the A of hearts in the analyzing and verifying part 142. Similarly, if echo waves emitted from three resonance wireless In tags are f1, f3, f7, it is judged that the card is the ten of hearts in the analyzing and verifying part 142.

As shown in Fig. 5(c), the chip identification information recording device 144 of the chip 128 comprises a subminiature wireless ID tag embedded in each chip 128. In the subminiature wireless ID tag, it is recorded the information connecting with the chip 128 such as value of the chip 128 in the card game (for example, 1 dollar, 5 dollars, 10 dollars), a specific number (the number identifying each chip 128) and the like. The identification information detecting devices 146, which detects the chip identification information recorded in the chip identification information recording device 144, are provided on the gaming table 68 near the dealer D and each of participants P1, P2, P3.

The identification information detecting device 146 is constructed form an ID reading device and a measuring device 160. In the ID reading device, there are provided an X-axis transmitting antenna 150 and an X-axis receiving antenna 152 both of which are extended parallel with each other from an X-axis scanning driver 148, and a Y-axis transmitting antenna 156 and a Y-axis receiving antenna 158 both of which are extended parallel with each other from a Y-axis scanning driver 154 and arranged so as to cross the X-axis transmitting antenna 44 and the X-axis receiving antenna 46 at right angle.

In the above ID reading device, in a case that the scanning wave is sent from the X-axis transmitting antenna 150 and the Y-axis transmitting antenna 156 under the state that the chip 128 is betted on the gaming table 68 (the identification information detecting device 146), the electric wave for reading is risen near the cross point of the antennae 150, 156. The electric wave for reading is received by the X-axis receiving antenna 152 and the Y-axis receiving antenna 158. At that time, if the chip 128 is betted (positioned) near the cross point, impedance is changed near the cross point based on that the chip 30 acts as dielectric substance, thereby wave receiving state in both the receiving antennae 152, 158 is changed. By detecting this changing state in wave receiving, it is detected whether the chip 128 exists or not. At the same time, the signal from the subminiature wireless ID tag 144 is received by the X-axis receiving antenna 152 and the Y-axis receiving antenna 158, thereby the chip information such as the value of the chip 128 (1 dollar, 5 dollars, 10 dollars) and the specific number (the number identifying each chip 128) is read out.

The measuring device 160 is arranged so as to cover the bet area of the identification information detecting device 146, as shown in Fig- 5(c). It is utilizable, for example, an electronic measuring device such as a semiconductor pressure sensor and the like, as the measuring device 160. In the measuring device 160, unit weight corresponding to one chip 128 is recorded, and the number of the chips 128 betted on the bet area can be calculated by dividing total weight of the chips 128 betted on the bet area by the unit weight of one chip 128. In this case, the PTS server 56 compares the calculated number of the chips 128 and the detected result by the identification information device 146, and when the calculated number of the chips 128 does not coincide with the detected result by the identification information device 146, the PTS server 56 determines that counterfeit chips are used and alarms it to the dealer D, for example.

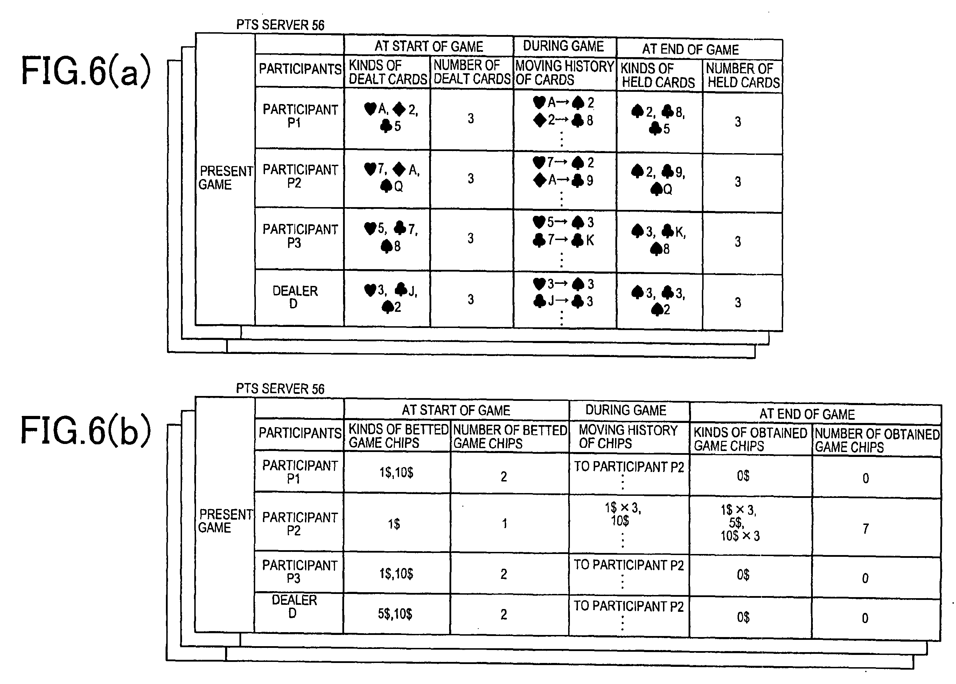

Hereinafter, It will be described how the card game is conducted in the above mentioned game management system. If the participants P1, P2 and P3 desire to play the card game, they enter in the casino 22 (see Fig. 1) with their identification cards 20. At first, they obtain the chips 128 at the chip issuing and settling machine 58. And the identification card 20 is set on the reading device 164. At that time, the contents of the identification card 20 is read out by the reading device 164, thereby each participant P1, P2 or P3 is identified and recognized as a person participating in the card game. Data read out and identified by the reading device 164 is transmitted to the PTS server 56 and persons P1, P2 and P3 are entered as the game participants in the present game as shown in Figs. 6(a) and 6(b). Here, reading method of the reading device 164 can be voluntarily set according to recording method in the identification card 20. For instance, if the recording method in the identification card 20 is magnetic recording method, the reading device 164 adopts magnetically reading method. Similarly, if the recording method in the identification card 20 is optical recording method, the reading device 164 adopts optically reading method.

As shown in Fig. 6(a), at the start of the card game, when the playing cards 126 are dealt to the participants P1, P2, P3 by the dealer D, the kinds and number of the playing cards 126 are detected by the identification information detecting device 130, and the detected data is transmitted to the PTS server 56. While the card game is conducted, moving history of the playing cards 126 moved between the dealer D and the participants P1, P2, P3 is serially detected by the identification information detecting device 130 and the detected data are transmitted to the PTS server 56. That is to say, moving routes and directions of the playing cards 126 can be easily and correctly detected by only moving the playing cards 126 on the identification information detecting device 130 of the gaming table 68. At the end of the card game, the kinds and number of the playing cards 126 held by the participants P1, P2, P3 are detected by the identification information detecting device 130 and the detected data is transmitted to the PTS server 56. As a result, all histories of the playing cards 126 in the card game are serially recorded and comprehensively managed in the tabulation-analysis server 62.

Further, as shown in Fig. 6(b), the chips 128 betted in the card game are usually detected by the identification information detecting device 146 (the ID reading device), and the value of the chips 128 (1 dollar, 5 dollars, 10 dollars) and the specific number (the number identifying the chip 128) are read out. At the same time, the betted number of the chips 128 is correctly calculated by the chip measuring device 160. As a result, the kinds, number and sum (money) of the chips 128 obtained by the participants P1,P2, P3 can be shortly and correctly calculated at the end of the card game. These data are entirely and serially recorded in the PTS server 56 during a time from the start of the card game to the end thereof, and is comprehensively managed in the tabulation-analysis server 62.

Here, in the embodiment mentioned, though the chips 30 are directly betted on the identification information detecting device 146, since it is formed in the identification card 20 the deposit reference part 64 (see Fig. 1) by which the hotel user can refer the deposit amount deposited by the hotel user, the hotel user may enjoy the card game according to the referred result by the deposit reference part 64, instead of the chips 128. In this case, the participants P1, P2, P3 can bet desirable bet money by an input device (for example, ten keys, not shown) positioned near the participants P1, P2, and P3. Similarly to the case of the chips 128, the betted money is serially registered in the PTS server 56 and comprehensively managed by the tabulation-analysis server 62. Here, increase and decrease of the deposit amount in the casino 22 is comprehensively managed by the casino deposit server 66 (see Fig. 1), therefore it can be conducted without cash renewal treatment of the deposit balance according to score of the game result and paying treatment in a case that the participants desire to set an additional deposit.

In the above game management system, the entire game histories of the playing cards 126 and the chips 128 can be comprehensively managed from the start of the game to the end thereof. Concretely speaking, since the playing cards 126 and the chips 128 are usually checked by the identification information detecting devices 130 and 146. Therefore, when counterfeit cards or counterfeit chips are used during the card game, it can be immediately determined that the counterfeit cards or chips are used. Further, in a case that the dealer D and the participants P1, P2, P3 conspire to do unfair act, it can be correctly grasped the time at which unfair act is done and the flow of the playing cards 126 in the card game, according to the history of the playing cards 126 detected by the identification information detecting device 130.

Further, in the above game management system, the hotel user can use all hotel facilities by using the identification card (house card) 20 which is issued when checking in the hotel. Thus, it can be spread highly individualized services.

Especially, up to this time, the gaming charge in the casino is set as a separate account and the casino user has to manage money for game himself or herself, thus it is very troublesome and inconvenient for the hotel user. However, in the above game management system, the casino user can pay out in one lump by using the identification card 20 when checking out the hotel, therefore burden of the casino user can be reduced.

And it can be avoided the problem that the casino user is beside himself with the game and endlessly enjoys the game, by utilizing the deposit function in the identification card 20, thus the casino user can avoid to unwillingly get more loss than wins. As a result, the casino user can relievedly enjoy the card game.

Needless to say, the identification card 20 can be used for the other gaming machines such as the slot machines and the gaming history thereof can be comprehensively managed by the PTS server 56 in which such history is registered according to the same manner as that shown in Fig. 6.

As mentioned above, according to the hotel management system of the embodiment, the hotel user can use all of the hotel facilities including the casino by the identification card 29 called the house card, and the hotel user can set up beforehand the deposit in the deposit reference part 64 formed in the identification card 20, the deposit being registered in the house card server 18. In this case, as shown in Fig. 4, the deposit maximum and the deposit amount are usually compared and checked in the house card server 18. Therefore, it can be avoided the problem that the casino user is beside himself with the game and endlessly pours money in the game. As a result, the casino user can relievedly continue the card game.

And not only gaming histories in the casino 22 (see Figs. 3 and 6) but also the kinds of the games played in the casino 22 and consumed money therein can be recorded together in the history from check-in to check-out, thus it can be spread highly individualized services.

Further, since the hotel user can use each of the hotel facilities and settle thereat by the identification card 20 (see Fig. 4), time and labor of the hotel user can be reduced and convenience for the hotel user can be improved.

## Claims

1. A hotel management system comprehensively managing using state of a plurality of hotel facilities (16, 6, 8) including a casino (22), the hotel management system comprising:
identification medium issuing means (4b) for issuing an identification medium (20) to a hotel user, the identification medium (20) capable of being used in the casino (22) and the hotel facilities (16, 6, 8) other than the casino (22) and having identification information which is differently allotted for each hotel user;
reading means (6b, 8b, 16b, 164) for reading the identification information recorded in the identification medium (20) issued by the identification medium issuing means(4b), the reading means (6b, 8b, 16b, 164) being installed in each of the hotel facilities (22, 16, 6, 8); and
managing means (2, 18, 10, 12, 62, 66, 56, 14) for managing the using state in each of the hotel facilities (22, 16, 6, 8) corresponding to the identification information read by the reading means (6b, 8b, 16b, 164).

2. The hotel management system according to claim 1, wherein the managing means (2, 18, 10, 12, 62, 66, 56, 14) manages money flow in the hotel facilities (22, 16, 6, 8) for each of the hotel users.

3. The hotel management system according to claim 1 or claim 2, wherein the hotel facilities include at least facilities for staying (16) and for eating and drinking (6, 8), in addition to the casino (22).

4. The hotel management system according to one of claims 1 ∼ 3, wherein the identification medium (20) has a deposit reference part (64) for referring a deposit deposited by the hotel user therein, and
wherein the hotel user can utilize the hotel facilities (22, 16, 6, 8) according to the deposit read from the deposit reference part (64) by the reading means (6b, 8b, 16b, 164).

5. The hotel management system according to one of claims 1 ∼ 4, wherein a plurality of gaming machines (24, 68, 70) are installed in the casino (22), and
wherein at least one of a roulette (24), a gaming table device (68) for playing card game and a slot machine (70) is included in the gaming machines.

6. The hotel management system according to claim 5, wherein the roulette (24) comprises:
a roulette wheel (26) having a plurality of pockets (54) formed therein;
a bet board (32) having a plurality of bet areas formed corresponding to the pockets (54) of the roulette wheel (26);
first detecting means (36) arranged on the roulette wheel (26), for detecting a position of the pocket (54) where a roulette ball (28) stops on the roulette wheel (26) and value in a roulette game corresponding to the pocket (54);
second detecting means (38) arranged on the bet board (32), for detecting a bet position of a chip and bet value when the chip (30) is betted on the bet area; and
payout calculating means (62A) for calculating a payout in the roulette game based on both the position of the pocket (54) where the roulette ball (28) stops and the value in the roulette game detected by the first detecting means (36) and both the bet position of the chip (30) and the bet value detected by the second detecting means (38);
wherein the managing means (56) manages a history of the roulette game based on a detected result by the first detecting means (36), a detected result detected by the second detecting means (38) and the payout calculated by the payout calculating means (62A).

7. The hotel management system according to claim 6, wherein the managing means (56) manages the history of the roulette game corresponding to the identification information of the hotel user read by the reading means (60).

8. The hotel management system according to claim 6 or claim 7, wherein the first detecting means (36) comprises:
a first transmitting antenna (44) and a first receiving antenna (46) both of which are arranged parallel with each other on each of the pockets (54);
a first scanning driver (42) connected to both the first transmitting antenna (44) and the first receiving antenna (46);
a second transmitting antenna (50) and a second receiving antenna (52) both of which are arranged parallel with each other on each of the pockets (54), so as to cross the first transmitting antenna (44) and the first receiving antenna (46) at right angle; and
a second scanning driver (48) connected to both of the second transmitting antenna (50) and the second receiving antenna (52).

9. The hotel management system according to claim 8, wherein the first detecting means (36) detects the pocket (54) where the roulette ball (28) stops by detecting a change of receiving state in electric wave detected by the first receiving antenna (46) and the second receiving antenna (52), when scanning electric wave is sent from the first transmitting antenna (44) by the first scanning driver (42) and is sent from the second transmitting antenna (50) by the second scanning driver (48).

10. The hotel management system according to one of claims 6 ∼ 9, further comprising:
identification information recording means arranged in the roulette ball (28), identification information for identifying the roulette ball (28) being recorded in the identification information recording means;
wherein the identification information includes at least information in connection with origin of the roulette ball, a place where the roulette ball can be utilized and a kind of the roulette ball.

11. The hotel management system according to claim 10, wherein the identification information recording means comprises a subminiature wireless ID tag embedded in the roulette ball (28), and
wherein the identification information recorded in the subminiature wireless ID tag is read by the first detecting means (36).

12. The hotel management system according to claim 11, wherein it is determined whether the roulette ball (28) can be utilized or not based on the identification information read by the first detecting means (36).

13. The hotel management system according to claim 6, wherein the second detecting means (38) comprises:
a first transmitting antenna (44) and a first receiving antenna (46) both of which are arranged parallel with each other on each of the bet areas of the bet board (32);
a first scanning driver (42) connected to both the first transmitting antenna (44) and the first receiving antenna (46);
a second transmitting antenna (50) and a second receiving antenna (52) both of which are arranged parallel with each other on each of the bet areas, so as to cross the first transmitting antenna (44) and the first receiving antenna (46) at right angle; and
a second scanning driver (48) connected to both of the second transmitting antenna (50) and the second receiving antenna (52).

14. The hotel management system according to claim 13, wherein the second detecting means (38) detects the bet area where the chip (30) is betted by detecting a change of receiving state in electric wave received by the first receiving antenna (46) and the second receiving antenna (52), when scanning electric wave is sent from the first transmitting antenna (44) by the first scanning driver (42) and is sent from the second transmitting antenna (50) by the second scanning driver (48).

15. The hotel management system according to one of claims 6 ∼ 14, further comprising:
chip information recording means (34) arranged in the chip (30), chip information being recorded in the chip information recording means (34);
wherein the chip information includes at least information in connection with a specific number for identifying the chip (30), bet value and a place where the chip (30) is utilized.

16. The hotel management system according to claim 15, wherein the chip information recording means (34) comprises a subminiature wireless ID tag embedded in the chip, and
wherein the chip information recorded in the subminiature wireless ID tag is read by the second detecting means (38).

17. The hotel management system according to one of claims 13 ∼ 16, further comprising:
measuring means (40) arranged corresponding to each of the bet areas in the bet board (32);
wherein the measuring means (40) calculates a number of the chips (30) based on unit weight of one chip (30).

18. The hotel management system according to claim 17, wherein the measuring means (40) comprises a semiconductor pressure sensor.

19. The hotel management system according to claim 17 or claim 18, wherein it is determined whether the chip (30) is forged or not by comparing the calculated number of the chips (30) by the measuring means (40) with the result detected by the second detecting means (38).

20. The hotel management system according to one of claims 17 ∼ 19, wherein it is determined that the chip (30) is forged when the calculated number of the chips (30) does not coincide with the result detected by the second detecting means (38).

21. The hotel management system according to claim 5, wherein the gaming table device comprises:
a gaming table (68);
a card arranging part to which cards (126) are dealt, the card arranging part being formed on the gaming table (68);
a bet part to which the chip (128) is betted, the bet part being formed on the gaming table (68);
first detecting means (130) for detecting kinds of the cards (126) dealt on the card arranging part; and
second detecting means (146) for detecting the chip (128) betted on the bet part;
wherein the managing means (56) manages a history of the card game based on the kinds of the cards (126) detected by the first detecting means (130) or the chip (128) detected by the second detecting means (146).

22. The hotel management system according to claim 21, wherein the managing means (56) manages the history of the card game corresponding to the identification information of the hotel user read by the reading means (164).

23. The hotel management system according to claim 21 or claim 22, wherein the first detecting means (130) comprises:
two or more resonance wireless ID tags (1 ∼ 7) embedded in the card (126);
a card determining device (132, 134, 136, 138, 149, 142) arranged in the card arranging part for determining kinds of the cards (126) based on frequencies of echo waves by sending electromagnetic wave to each of the resonance wireless ID tags (1 ∼ 7) and receiving echo waves emitted from the resonance wireless ID tags (1 ∼ 7).

24. The hotel management system according to claim 21, wherein the second detecting means (146) comprises:
a first transmitting antenna (150) and a first receiving antenna (152) both of which are arranged parallel with each other on the bet part;
a first scanning driver (148) connected to both the first transmitting antenna (150) and the first receiving antenna (152);
a second transmitting antenna (156) and a second receiving antenna (158) both of which are arranged parallel with each other on the bet part, so as to cross the first transmitting antenna (150) and the first receiving antenna (152) at right angle; and
a second scanning driver (154) connected to both of the second transmitting antenna (156) and the second receiving antenna (158).

25. The hotel management system according to claim 24, wherein the second detecting means (146) detects that the chip (128) is betted on the bet part by detecting a change of receiving state in electric wave received by the first receiving antenna (152) and the second receiving antenna (158), when scanning electric wave is sent from the first transmitting antenna (150) by the first scanning driver (148) and is sent from the second transmitting antenna (156) by the second scanning driver (154).

26. The hotel management system according to one of claims 21 ∼ 25, further comprising:
chip information recording means (144) arranged in the chip (128), chip information being recorded in the chip information recording means (144);
wherein the chip information includes at least information in connection with a specific number for identifying the chip (128), bet value and a place where the chip (128) can be utilized.

27. The hotel management system according to claim 26, wherein the chip information recording means (144) comprises a subminiature wireless ID tag embedded in the chip (128), and
wherein the chip information recorded in the subminiature wireless ID tag is read by the second detecting means (146).

28. The hotel management system according to one of claims 24 ∼ 27, further comprising:
measuring means (160) arranged corresponding to the bet part;
wherein the measuring means (160) calculates a number of the chips (128) based on unit weight of one chip (128).

29. The hotel management system according to claim 28, wherein the measuring means (160) comprises a semiconductor pressure sensor.

30. The hotel management system according to claim 28 or claim 29, wherein it is determined whether the chip (128) is forged or not by comparing the calculated number of the chips (128) by the measuring means (160) with the result detected by the second detecting means (146).

31. The hotel management system according to one of claims 28 ∼ 30, wherein it is determined that the chip (128) is forged when the calculated number of the chips (128) does not coincide with the result detected by the second detecting means (146).

32. A hotel management system comprehensively managing using state of a plurality of hotel facilities (16, 6, 8) including a casino (22), the hotel management system comprising:
an identification medium issuing device (4b) for issuing an identification medium (20) to a hotel user, the identification medium (20) capable of being utilized in the casino (22) and the hotel facilities (16, 6, 8) other than the casino (22) and having an identification information which is differently allotted for each hotel user;
a reading device (6b, 8b, 16b, 164) for reading the identification information recorded in the identification medium (20) issued by the identification medium issuing device (4b), the reading device (6b, 8b, 16b, 164) being installed in each of the hotel facilities (22, 16, 6, 8); and
a managing device (2, 18, 10, 12, 62, 66, 56, 14) for managing the using state in each of the hotel facilities (22, 16, 6, 8) corresponding to the identification information read by the reading device (6b, 8b, 16b, 164).
